# EUROPEAN PATENT SPECIFICATION

(11) **EP 1 499 644 B1**
(45) Date of publication and mention of the grant of the patent: **03.01.2007**
(21) Application number: 03727348.9
(22) Date of filing: 24.04.2003
(51) Int. Cl.: C08B 37/16, C08K 5/00, C08L 5/16, D06M 15/03

(54) **AQUEOUS LIQUID COMPOSITIONS OF REACTIVE CYCLODEXTRIN DERIVATIVES AND A FINISHING PROCESS USING THE SAID COMPOSITION**
WÄSSRIGE, FLÜSSIGE ZUSAMMENSETZUNGEN AUF BASIS VON REAKTIVEN CYCLODEXTRINDERIVATEN UND VEREDELUNGSVERFAHREN UNTER VERWENDUNG DIESER ZUSAMMENSETZUNG
COMPOSITIONS LIQUIDES AQUEUSES DE DERIVES DE CYCLODEXTRINE REACTIVE ET OPERATION DE FINISSAGE UTILISANT CES COMPOSITIONS

(30) Priority: 29.04.2002 EP 02405351
(43) Date of publication of application: 26.01.2005
(73) Proprietor: Huntsman Advanced Materials (Switzerland) GmbH, 4057 Basel (CH)
(72) Inventor: KULKE, Torsten, 79639 Grenzach-Wyhlen (DE)
(86) International application number: PCT/EP2003/004261
(87) International publication number: WO 2003/093325

(56) References cited:
- WO-A-02/22941
- DE-A- 3 427 787
- DE-A- 19 520 967
- DE-A- 19 520 989
- FR-A- 2 665 170
- US-A- 5 728 823

## Description

The present invention relates to a reactive cyclodextrin derivative-containing aqueous liquid composition excellent in storage stability and a finishing process for the treatment of suitable substrates, in particular fibre materials, using the said composition. Furthermore, the invention includes compositions containing the hydrolyzate of the reactive cyclodextrin derivative.

Industrial finishing processes are usually carried out in an aqueous medium. When used for the finishing process finishing agents commercially available in the form of powder or granule must be dissolved in an aqueous medium using hot water.

In recent years, such finishing processes have been mechanized and automated in many aspects, and therefore the finishing agents have been eagerly required to be made into a form suitable for an automatic weighing and dispensing system.

Cyclodextrins are cage like molecules of a cyclic configuration made up of a varying number of D-glucopyranosyl units, such as 6, 7 or 8 units (α-, β- or γ-cyclodextrins), connected by alpha-(1,4) glycosidic linkages, thereby defining a central cavity. The chemical formula of α-cyclodextrin is depicted below.

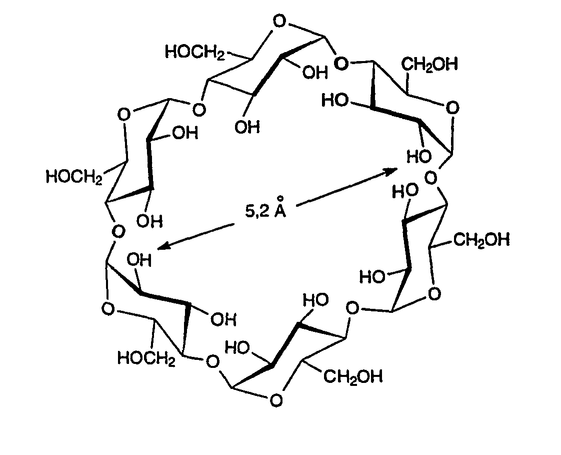

The natural cyclodextrins are produced from starch by the action of cyclodextrin glycosyltransferase (CGTase), an enzyme produced by several organisms, Bacillus macerans being the earliest source. The most stable three dimensional molecular configuration for these cyclic oligosaccharides takes the form of a toroid with the upper (larger) and lower (smaller) opening of the toroid presenting secondary and primary hydroxyl groups, respectively, to the solvent environment. The interior of the toroid is hydrophobic as a result of the electron rich environment provided in large part by the glycosidic oxygen atoms. It is the interplay of atomic (Van der Waals), thermodynamic (hydrogen bonding), and solvent (hydrophobic) forces that accounts for stable complexes that may be formed with chemical substances while in the apolar environment of the cyclodextrin cavity. The complex exists in an equilibrium dependent upon the concentrations of the cyclodextrin, the guest molecule and water. The rate at which the associated complex is formed is determined in large part by the accessibility of the guest molecule to the cyclodextrin cavity and the magnitude of the net thermodynamic driving force.

Uncomplexed cyclodextrin derivatives have been used as finishing agents for the treatment of fibre materials in order to reduce or prevent malodors due to perspiration (DE-A-40 35 378). Moreover, uncomplexed cyclodextrin derivatives allow for the complexation of fragrances and perfumes (DE-A-40 35 378) or antimicrobial substances (WO-A-02/22941) which are released slowly and impart long-lasting fragrance or a prolonged antimicrobial effect to the finished textile material. The prolonged presence of antimicrobials makes the substrates more hygienic, less prone to cross contamination and fresher.

An aqueous liquid composition of reactive cyclodextrin derivatives or the hydrolyzates thereof is considered advantageous, since it is suitable for the automatic weighing and dispensing system and causes no powder-scattering during handling, resulting in no pollution of the working environment, and moreover it can serve saving energy and labor, since substituted cyclodextrin derivatives are prone to swelling upon contact with water and therefore have a strong tendency to form lumps which can hardly be dissolved.

US-A-5728823 mentions aqueous compositions of reactive cyclodextrin derivatives. Other documents, FR-A-2665170, DE-A-3427787, EP-A-0519428 and WO-A-02/22941, refer to the manufacture of inclusion complexes in an aqueous media.

Accordingly it is the subject of the present invention to provide a stable aqueous liquid composition comprising a reactive cyclodextrin derivative or the hydrolyzate thereof and at least one component selected from the group consisting of ε-caprolactam and isopropanol, propylene carbonate, polyethylene glycol, N-methyl-2-pyrrolidone, 1-methoxy propanol, diethylene glycol diethyl ether, glycerol and 1,2-propylene glycol as the water-miscible organic solvent.

As the water-miscible organic solvent there come into consideration, in particular isopropanol, propylene carbonate, polyethylene glycol, 1-methoxypropanol and diethylene glycol diethyl ether.

In the context of the present invention the term water-miscible organic solvents is to be understood as designating solvents which are miscible with water in any ratio as well as solvents which are only miscible with water in a certain ratio, i.e. partly water miscible solvents.

The inventive compositions may comprise one or more than one, such as two or three of the above indicated water-miscible organic solvents in admixture.

In a particular embodiment of the present invention, the inventive compositions contain ε-caprolactam as a solubilising agent without any water-miscible organic solvent being present.

Preference is given to compositions, wherein the water-miscible organic solvent is present in an amount of 2 to 60 % by weight, especially 5 to 40 % by weight and preferably 5 to 25 % by weight, based on the total weight of the composition.

Preference is given to compositions, wherein ε-caprolactam is present in an amount of 2 to 40 % by weight, especially 5 to 30 % by weight and preferably 10 to 20 % by weight, based on the total weight of the composition.

In another particular embodiment of the present invention, the inventive compositions contain ε-caprolactam as a solubilising agent together with isopropanol, e.g. in an amount of 1 to 10 % by weight, based on the total weight of the composition.

Preference is given to compositions, wherein the reactive cyclodextrin derivative or the hydrolyzate thereof is present in an amount of 2 to 70 % by weight, especially 5 to 40 % by weight and preferably 10 to 30 % by weight, based on the total weight of the composition.

Reactive groups of the cyclodextrin derivatives are groups capable of reacting with functional groups of a suitable substrate, such as a textile fibre material, for example with the hydroxyl groups of cellulose, the amino, carboxyl, hydroxyl or thiol groups in the case of wool and silk or with the amino and possibly carboxyl groups of synthetic polyamides with the formation of covalent chemical bonds. Reactive groups are generally attached directly or via a bridge member to a carbon atom of the cyclodextrin derivative. Examples of suitable reactive groups include those which contain at least one detachable substituent on an aliphatic, aromatic or preferably on a heterocyclic radical or in which the radicals mentioned contain a radical suitable for reaction with the fibre material. Examples of suitable bridge members according to which the fibre-reactive groups can be attached to a carbon atom of the cyclodextrin derivative are -NH-, -O-CO- and -O-, especially -O-CO- and -O, and preferably -O-.

Reactive cyclodextrin derivatives are known and the preparation of such reactive cyclodextrin derivatives can be carried out according to known processes.

Reactive cyclodextrin derivatives containing aldehyde groups capable of reacting with the hydroxyl groups of cellulose or polyvinyl alcohol are described in EP-A-0 483 380. A. Deratani, B. Pöpping, Makromol. Chem. Rapid Commun. 13 (1992) 237 describe the preparation of cyclodextrin chlorohydrin (3-chloro-2-hydroxypropyl-cyclodextrin derivative) by reaction of β-cyclodextrin in an aqueous medium with epichlorohydrin.

German patent application No. 101 55 782.5 furthermore discloses the preparation of β-cyclodextrin derivatives containing reactive 2,3-dibromopropionyl- or vinylsulfonyl groups which are well known reactive anchor groups in the field of reactive dyestuffs.

Basically, all fibre reactive groups known in the field of reactive dyestuffs, such as described in Venkataraman "The Chemistry of Synthetic Dyes" Vol. 6, pages 1-209, Academic Press, New York, London 1972 or EP-A-625 549 and US-A-5 684 138 are suitable.

Further examples of reactive groups include reactive radicals containing carbo- or heterocyclic 4-, 5- or 6-rings substituted by a detachable atom or group. Examples of heterocyclic radicals include heterocyclic radicals which contain at least one detachable substituent attached to a heterocyclic ring; and those which contain at least one reactive substituent attached to a 5- or 6-membered heterocyclic ring, as to a triazine, pyridine or pyrimidine. The heterocyclic reactive radicals mentioned may further contain, via a direct bond or via a bridge member, further reactive radicals. Such reactive cyclodextrin derivatives are described in US-A-5 728 823.

The present invention also includes compositions containing the hydrolyzate of the reactive cyclodextrin derivative. Hydrolyzates of reactive cyclodextrin derivatives are formed upon the reaction of the reactive groups with water in the known manner. Compositions containing reactive cyclodextrin derivatives are preferred.

Preferably the reactive group of the cyclodextrin derivative is vinylsulfonyl, α,β-dihalopropionyl, α-haloacryloyl, wherein halo is e.g. bromo or chloro, in particular bromo, or a nitrogen-containing heterocycle having at least one substituent selected from the group consisting of halogen, especially fluorine or chlorine, and unsubstituted or substituted pyridinium. It is to be understood that vinylsulfonyl will also include the precursors thereof which correspond to the formula -SO₂-CH₂-CH₂-Z, wherein Z is a group removable under alkaline conditions. Z is for example -Cl, -Br, -F, -OSO₃H, -SSO₃H, -OCO-CH₃, -OPO₃H₂, -OCO-C₆H₅, -OSO₂-C₁-C₄alkyl or -OSO₂-N(C₁-C₄alkyl)₂. Z is preferably a group of formula -Cl, -OSO₃H, -SSO₃H, -OCO-CH₃, -OCO-C₆H₅ or -OPO₃H₂, especially -Cl or -OSO₃H and more especially -OSO₃H.

More preferably the reactive group of the cyclodextrin derivative is a nitrogen-containing heterocycle having at least one substituent selected from the group consisting of halogen, especially fluorine or chlorine, and unsubstituted or substituted pyridinium.

Specific examples of nitrogen-containing heterocyclic reactive groups are
a) a triazine group of formula 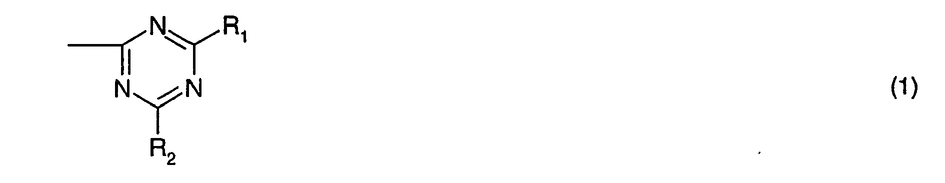 wherein
   R₁ is fluorine, chlorine, unsubstituted or carboxy-substituted pyridinium or hydroxy, preferably fluorine, chlorine or unsubstituted or carboxy-substituted pyridinium, and
   R₂ is as defined above for R₁ or is a radical of formula -OR₃ or -N(R₄)R₅, wherein
   R₃ is hydrogen, alkali, C₁-C₈alkyl which is unsubstituted or substituted by hydroxy or C₁-C₄alkoxy, and
   R₄ and R₅, independently from each other, are hydrogen; C₁-C₈alkyl which is unsubstituted or substituted by C₁-C₄alkoxy, hydroxy, sulfo, sulfato or carboxy; or phenyl which is unsubstituted or substituted by C₁-C₄alkyl, C₁-C₄alkoxy, halogen, nitro, carboxy or sulfo;
b) or a pyrimidinyl group of formula 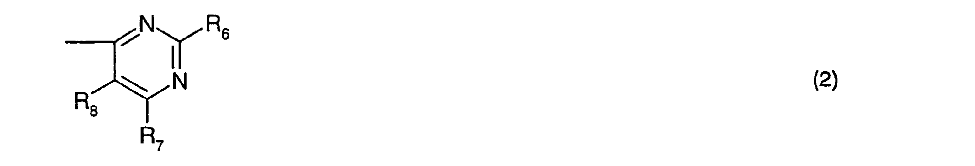 wherein
   one of radicals R₆ and R₇ is fluorine or chlorine and the other one of radicals R₆ and R₇ is fluorine, chlorine, or is a radical of formula -OR₃ or -N(R₄)R₅ as defined above, and
   R₈ is C₁-C₄alkylsulfonyl, C₁-C₄alkoxysulfonyl, C₁-C₄alkoxycarbonyl, C₂-C₄alkanoyl, chlorine, nitro, cyano, carboxyl or hydroxyl;
c) or a dichloroquinoxaline group of formula

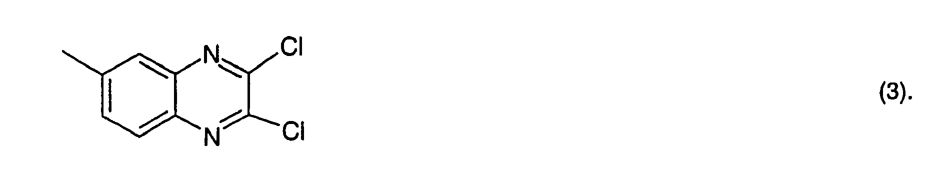

Highly preferred are groups of formula (1), especially those wherein R₁ is chlorine. R₂ is preferably a radical of formula -OR₃, wherein R₃ is hydrogen, alkali or C₁-C₈alkyl. Preferred radicals R₂ are those of formula -OR₃ wherein R₃ is hydrogen, alkali or C₁-C₄alkyl, especially hydrogen or alkali. Alkali is highly preferred. Alkali is preferably sodium.

The cyclodextrin derivatives contain e.g. 1 to 4, preferably 2 to 3 reactive groups.

The cyclodextrin derivatives may be uncomplexed or complexed, for example, with antimicrobials, biocides, bactericides, insecticides, fungicides, pharmaceutical active compounds, UV-stabilizers, perfumes, fragrances, pheromones, vitamines or skin-, hair and textile benefit agents, e.g. UV-absorber, fatty acids, anti-irritants or inflammatory agents.

The preparation of complexed reactive cyclodextrine derivatives can be carried out according to known processes, such as described in WO-A-02/22941.

The compositions may also comprise buffer substances, e.g. borax, borates, phosphates, polyphosphates, oxalates, acetates or citrates, in particular phosphates, acetates or citrates. Examples that may be mentioned include borax, sodium borate, sodium tetraborate, sodium dihydrogen phosphate, disodium hydrogen phosphate, sodium tripolyphosphate, sodium pentapolyphosphate, sodium oxalate, sodium acetate and sodium citrate. Preferred are buffer systems with a pKs from 4 to 10. Buffers are used in a concentration, for example, from 0.1 to 3.0 Mol/l, preferably from 0.1 to 1.0 Mol/I in order to establish, for example, a pH value from 4 to 10, especially from 5 to 8.5. Examples of preferred buffer systems are sodium acetate/acetic acid, sodium citrate/citric acid and sodium dihydrogen phosphate/disodium hydrogen phosphate or sodium poly phosphates.

As further additives, the aqueous liquid compositions according to the present invention may comprise surfactants, humectants, defoaming agents and antifreezing agents.

Suitable surfactants include commercially available anionic or non-ionic surfactants. As humectants in the compositions according to the invention there come into consideration, for example, urea or a mixture of sodium lactate (advantageously in the form of a 50 % to 60 % aqueous solution) and glycerol and/or propylene glycol in amounts of preferably from 0.1 to 30 % by weight, especially from 2 to 30 % by weight.

The aqueous liquid composition can be prepared, for example, in the following manner.

An aqueous mixture of the cyclodextrin derivative is mixed with a predetermined amount of the water-miscible organic solvent or ε-caprolactam to form a clear solution, and the clear solution is adjusted to a pH within a range of from 4 to 10, especially from 5 to 8.5, using, e.g. an acid such as sulfuric acid, hydrochloric acid, acetic acid and the like, or an alkali such as sodium hydroxide, sodium carbonate and the like, and if appropriate by the addition of a buffer substance. Thereafter, water is added to the clear solution to obtain an aqueous liquid composition having the desired concentration of the cyclodextrin. Alternatively an aqueous mixture of the cyclodextrine derivative is adjusted to a pH within a range of from 4 to 10, especially from 5 to 8.5, by the means indicated herebefore, followed by adding a predetermined amount of the water-miscible organic solvent or ε-caprolactam to form a clear solution.

The compositions according to the invention are suitable as finishing- or benefit-agents for widely varying kinds of substrates, such as paper, textile fibre materials, keratineous fibres, e.g. human hair, leather, or films or foils of plastic made of polymers susceptible to the reaction with the fibre reactive cyclodextrin, for example, polyvinylalcohol or polymers or copolymers of acrylic acid, methacrylic acid or hydroxyethylmethacrylate, thereby modifying the surface of such substrates.

Preferred as the substrates are textile fibre materials containing hydroxyl groups or containing nitrogen. Textile fibre materials can be in the form of fibre, yarn or piece goods, such as non-wovens, knitted and woven goods, pile fabrics or terry goods. Examples are silk, wool, polyamide fibres and polyurethanes, and in particular all types of cellulosic fibre materials. Such cellulosic fibre materials are, for example, the natural cellulosic fibres, such as cotton, linen and hemp, as well as cellulose and regenerated cellulose. The compositions according to the invention are also suitable for finishing fibres containing hydroxyl groups which are contained in blend fabrics, for example mixtures of cotton with polyester fibres or polyamide fibres. The compositions according to the invention are particularly suitable for finishing cellulosic materials. They can furthermore be used for finishing natural or synthetic polyamide fibre materials.

The compositions according to the invention are applied to the goods in aqueous solution, in analogy to the dyeing processes known for reactive dyes, if appropriate by dilution, e.g. with water. They are suitable both for the exhaust- and for the pad-method, in which the goods are impregnated with aqueous solutions, which may contain salts. Dyeing machines customary in dyeing with reactive dyes are preferably utilized for this. The reactive cyclodextrins are fixed, if appropriate after an alkali treatment, or preferably in the presence of alkali, under the action of heat, steam or by storage at room temperature for several hours, thereby forming a chemical bond with the substrate. The compositions according to the invention can also be applied in the presence of crosslinking agents or resin finish, for example, dimethylol-dihydroxy-ethylene-urea (DMDHEU), butane-tetra-carboxylic-acid (BTCA), citric acid, or maleic acid, or bonding agents, for example, acrylates, silicones, urethanes, butadienes, in a textile finishing process which may result in superior effect durability. Such textile finishing processes are described, for example, in DE-A-40 35 378. After the fixing, the finished substrates are rinsed thoroughly with cold and hot water, if appropriate with the addition of an agent which has a dispersing action and promotes diffusion of the non-fixed portions.

The finished substrates contain, for example, 0.5 to 25% by weight, preferably 1 to 10% by weight, of the cyclodextrine derivative, based on the total weight of the substrate.

The finished substrates can be used to complex within the cyclodextrin cavity, for example, UV-stabilizers, antimicrobials, biocides, bactericides, insecticides, fungicides, pharmaceutical active compounds, fragrances, perfumes, pheromones, vitamines or skin-, hair and textile benefit agents, e.g. UV-absorber, fatty acids, anti-irritants or inflammatory agents, to e.g. solubilize water-insoluble or poorly water-soluble substances, to increase the bioavailability of active compounds; to stabilize substances against light, temperature, oxidation, hydrolysis or from volatility, to mask bad taste or unpleasant odor, to slowly release active compounds in a controlled manner over a prolonged period of time (delivery systems). On the other side, the finished substrates are useful to assimilate chemical substances, e.g. from a gaseous or liquid environment, which are captured in the cyclodextrin cavity, thereby serving as a collector system. Such collector systems may find application in the field of medical diagnostics or help to determine pollutants from the environment. Decomposition products of perspiration are trapped in the cyclodextrin cavity, thus diminishing or preventing malodor. Textile materials, such as clothings finished with the inventive composition stay fresh with a pleasant smell.

The inventive compositions are distinguished by a good shelf stability and they do not precipitate when stored for a long period of time even at lower temperatures.

The following examples serve to illustrate the invention. Temperatures are stated in degrees Celsius, parts are parts by weight and the percentage data are based on percentages by weight, unless noted otherwise. Parts by weight bear the same relation to parts by volume as the kilogram to the litre.

Example **1:** 200 parts of Cavasol W7 MCT^{®} (β-cyclodextrin which contains 2 to 3 fiber-reactive monochlorotriazinyl groups which are substituted by -ONa and are attached to the cyclodextrin via a bridge member of formula -O-; commercially available from Wacker Chemie AG, Germany) are dissolved in 480 parts of water. The solution is turbid. To this solution 99 parts of sodium citrate dihydrate and 1 part of citric acid are added as a buffer. After the addition of 180 parts of ε-caprolactam and 40 parts of isopropanol the solution turns completely clear and homogeneous. Dependent on the batch of Cavasol W7 MCT^{®} the pH is from 6.5 to 8.0.

100 parts of the composition thus obtained are stored for 3 months at 0°C, for 3 months at 20°C, for 3 months at 40°C and for one month at 60°C, respectively. In any case the appearance of the solution did not change, even when submitted to repeated cooling and warming cycles. In any case the pH did not drop below a value of 6. Comparative samples were prepared without the addition of ε-caprolactam and isopropanol and were stored under the same conditions as the inventive compositions. In contrast to the inventive compositions, the comparative samples stayed turbid and a precipitate appeared after a few days of storage. Even after removal of the precipitate from the comparative samples by filtration turbidity and a precipitate appeared again after a few days of storage.

Example 2: 200 parts of an inclusion complex of Cavasol W7 MCT^{®} and a compound of formula 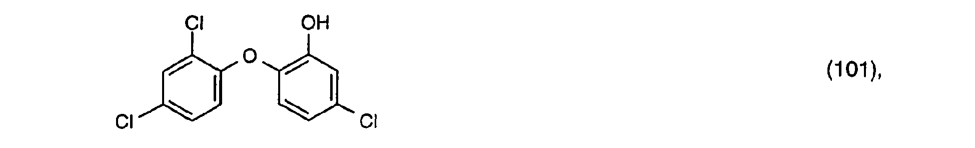 prepared in accordance with Example 5 of WO-A-02/22941 are dissolved in 520 parts of water. The solution is turbid. To this solution 99 parts of sodium acetate trihydrate and 1 part of acetic acid are added as a buffer. After the addition of 180 parts of ε-caprolactam the solution turns completely clear and homogeneous. Dependent on the batch of the inclusion complex of Cavasol W7 MCT^{®} the pH is from 6.5 to 8.0.

100 parts of the composition thus obtained are stored for 3 months at 0°C, for 3 months at 20°C, for 3 months at 40°C and for one month at 60°C, respectively. In any case the appearance of the solution did not change, even when submitted to repeated cooling and warming cycles. In any case the pH did not drop below a value of 6. Comparative samples were prepared without the addition of ε-caprolactam and were stored under the same conditions as the inventive compositions. In contrast to the inventive compositions, the comparative samples stayed turbid and a precipitate appeared after a few days of storage. Even after removal of the precipitate from the comparative samples by filtration turbidity and a precipitate appeared again after a few days of storage.

Examples 3 to 20: The following homogeneous compositions given in table 1 are prepared in analogy to the compositions of Example 1 or 2.

**Table 1**

| Ex. | Composition | |
|---|---|---|
| 3 | 200 | parts of Cavasol W7 MCT^{®}, |
| | 520 | parts of water, |
| | 180 | parts of ε-caprolactam, |
| | 99 | parts of sodium acetate trihydrate and |
| | 1 | part of acetic acid |
| 4 | 100 | parts of Cavasol W7 MCT^{®}, |
| | 620 | parts of water, |
| | 180 | parts of ε-caprolactam, |
| | 99 | parts of sodium acetate trihydrate and |
| | 1 | part of acetic acid |
| 5 | 300 | parts of Cavasol W7 MCT^{®}, |
| | 420 | parts of water, |
| | 180 | parts of ε-caprolactam, |
| | 99 | parts of sodium acetate trihydrate and |
| | 1 | part of acetic acid |
| 6 | 200 | parts of Cavasol W7 MCT^{®}, |
| | 600 | parts of water, |
| | 100 | parts of ε-caprolactam, |
| | 99 | parts of sodium acetate trihydrate and |
| | 1 | part of acetic acid |
| 7 | 200 | parts of Cavasol W7 MCT^{®}, |
| | 480 | parts of water, |
| | 180 | parts of ε-caprolactam, |
| | 40 | parts of isopropanol |
| | 99 | parts of sodium acetate trihydrate and |
| | 1 | part of acetic acid |
| 8 | 200 | parts of Cavasol W7 MCT^{®}, |
| | 500 | parts of water, |
| | 200 | parts of 1-methoxy propanol, |
| | 99 | parts of sodium citrate dihydrate and |
| | 1 | part of citric acid |
| 9 | 200 | parts of Cavasol W7 MCT^{®}, |
| | 500 | parts of water, |
| | 200 | parts of diethylene glycol diethyl ether, |
| | 99 | parts of sodium citrate dihydrate and |
| | 1 | part of citric acid |
| 10 | 200 | parts of Cavasol W7 MCT^{®}, |
| | 600 | parts of water, |
| | 100 | parts of propylene carbonate, |
| | 99 | parts of sodium citrate dihydrate and |
| | 1 | part of citric acid |
| 11 | 200 | parts of Cavasol W7 MCT^{®}, |
| | 500 | parts of water, |
| | 200 | parts of isopropanol, |
| | 99 | parts of sodium citrate dihydrate and |
| | 1 | part of citric acid |
| 12 | 200 | parts of an inclusion complex of Cavasol W7 MCT^{®} and a compound of formula (101), |
| | 520 | parts of water, |
| | 180 | parts of ε-caprolactam, |
| | 99 | parts of sodium citrate dihydrate and |
| | 1 | part of citric acid |
| 13 | 200 | parts of an inclusion complex of Cavasol W7 MCT^{®} and a compound of formula (101), |
| | 520 | parts of water, |
| | 180 | parts of ε-caprolactam, |
| | 99 | parts of sodium acetate trihydrate and |
| | 1 | part of acetic acid |
| 14 | 200 | parts of an inclusion complex of Cavasol W7 MCT^{®} and a compound of formula (101), |
| | 480 | parts of water, |
| | 180 | parts of ε-caprolactam, |
| | 40 | parts of isopropanol, |
| | 99 | parts of sodium citrate dihydrate and |
| | 1 | part of citric acid |
| 15 | 200 | parts of an inclusion complex of Cavasol W7 MCT^{®} and a compound of formula (101), |
| | 500 | parts of water, |
| | 160 | parts of 1-methoxypropanol, |
| | 40 | parts of isopropanol, |
| | 99 | parts of sodium acetate trihydrate and |
| | 1 | part of acetic acid |
| 16 | 200 | parts of an inclusion complex of Cavasol W7 MCT^{®} and a compound of formula (101), |
| | 500 | parts of water, |
| | 160 | parts of 1-methoxypropanol, |
| | 40 | parts of isopropanol, |
| | 99 | parts of sodium citrate dihydrate and |
| | 1 | part of citric acid |
| 17 | 200 | parts of an inclusion complex of Cavasol W7 MCT^{®} and a compound of formula (101), |
| | 500 | parts of water, |
| | 200 | parts of diethylene glycol diethyl ether, |
| | 99 | parts of sodium citrate dihydrate and |
| | 1 | part of citric acid |
| 18 | 200 | parts of an inclusion complex of Cavasol W7 MCT^{®} and a compound of formula (101), |
| | 500 | parts of water, |
| | 160 | parts of diethylene glycol diethyl ether, |
| | 40 | parts of isopropanol, |
| | 99 | parts of sodium citrate dihydrate and |
| | 1 | part of citric acid |
| 19 | 200 | parts of an inclusion complex of Cavasol W7 MCT^{®} and a compound of formula (101), |
| | 600 | parts of water, |
| | 100 | parts of propylene carbonate, |
| | 99 | parts of sodium citrate dihydrate and |
| | 1 | part of citric acid |
| 20 | - 200 | parts of an inclusion complex of Cavasol W7 MCT^{®} and a compound of formula (101), |
| | 600 | parts of water, |
| | 200 | parts of 1-methoxypropanol, |
| | 99 | parts of sodium acetate trihydrate and |
| | 1 | part of acetic acid |

The compositions of Examples 3 to 20 were stored for 3 months at 0°C, for 3 months at 20°C, for 3 months at 40°C and for one month at 60°C, respectively, as described in Examples 1 or 2. The appearance of the solution after storage is given in table 2.

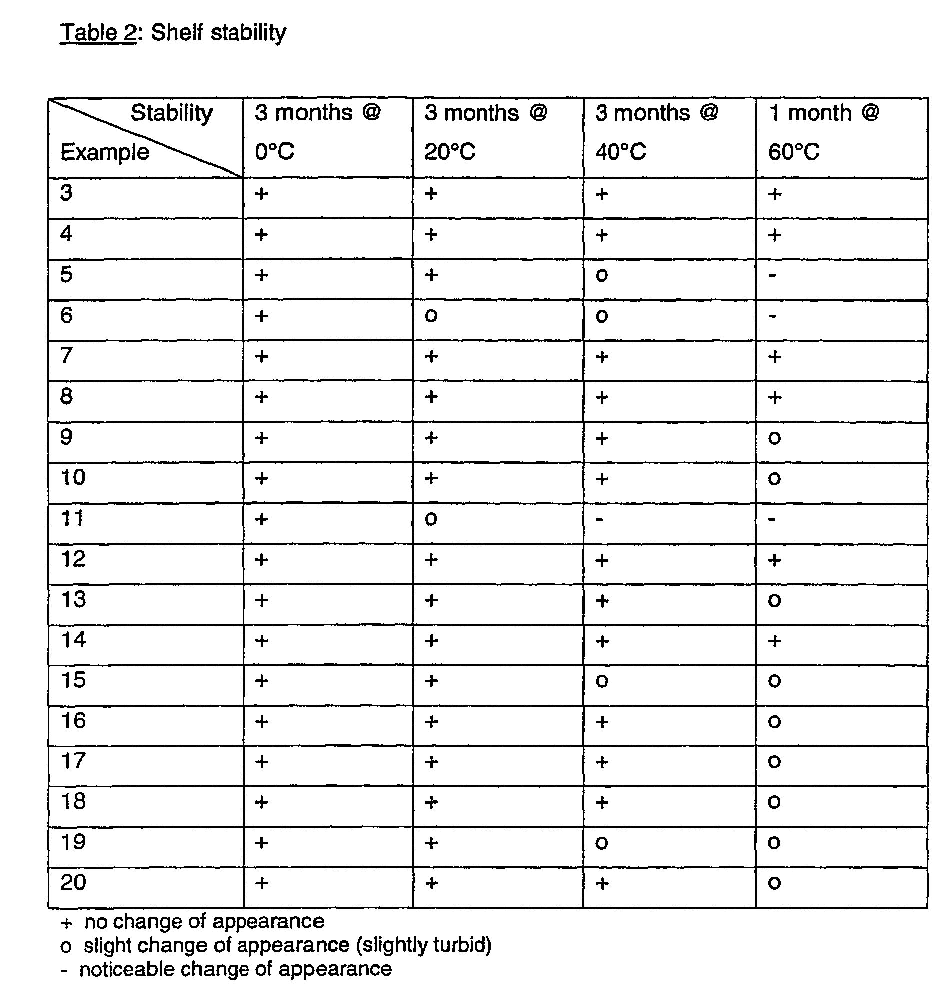

Application Example 1: 1000 parts of a solution are prepared by dissolving in water 80 parts of the composition obtained according to Example 1, 30 parts of CIBA Knittex^{®} FEL and 9 parts of CIBA Knittex^{®} CAT MO (textile finishing agent available from Ciba Specialty Chemicals). Different fabrics (knitted cotton, viscose and cotton/polyester (50/50) blends) are impregnated with the solution such that it increases by 70% of its weight, subsequently dried below 80°C and fixed for 1 minute at 160°C.

The finished fabrics are submitted to a washing test at 40°C (1 time, 10 times, 50 times and 100 times) under the following conditions:
- Detergent:: 30 g IEC 456-A (standard detergent)
- Washing machine:: Wascator FOM 71 MP LAB.

Covalently bound cyclodextrin is verified by determination of the bleaching of an alkaline phenolphthalein solution according to Textilveredlung 1/2 (2002) 17-22.

Ability of the finished fabric to reduce malodor has been tested by keeping 1 g specimens of the finished fabrics (unwashed, 1 x washed, 10 x washed, 50 x washed and 100 x washed) over night in closed bottles (content 100 ml) containing 50 mg of water and 20 mg of an ethanol solution (80 vol.-%) containing 0.1 % p-cresol. The specimens were air-ventilated for 5 minutes. In any case a distinct reduction of malodor (p-cresol) was detected by 4 different test persons compared to unfinished specimens treated in the same manner.

Application Example 2: 1000 parts of a solution are prepared by dissolving in water 80 parts of the composition obtained according to Example 2, 30 parts of CIBA Knittex^{®} FEL and 9 parts of CIBA Knittex^{®} CAT MO (textile finishing agent available from Ciba Cpecialty Chemicals). Different fabrics (knitted cotton, viscose and cotton/polyester (50/50) blends) are impregnated with the solution such that it increases by 70% of its weight, subsequently dried below 80°C and fixed for 1 minute at 160°C.

The finished fabrics are submitted to a washing test at 40°C (1 time, 10 times, 50 times and 100 times) under the following conditions:
- Detergent:: 30 g IEC 456-A (standard detergent)
- Washing machine:: Wascator FOM 71 MP LAB.

The covalently bound cyclodextrin complex has been verified by determination of the antimicrobial efficacy against Staphylococcus aureus ATCC 9144 and Escherichia coli NCTC 8196 in an agar diffusion test (AATCC test method 147). Antimicrobial efficacy was very high against Staphylococcus aureus ATCC 9144 and Escherichia coli NCTC 8196 in the case of knitted cotton fabrics (unwashed, 1 x washed, 10 x washed, 50 x washed and 100 x washed). Knitted blends of cotton/polyester (50/50) showed very good antimicrobial efficacy against Staphylococcus aureus ATCC 9144 and Escherichia coli NCTC 8196 after 50 washes and still good antimicrobial efficacy after 100 washes. Viscose showed a very good antimicrobial efficacy against Staphylococcus aureus ATCC 9144 up to 25 washes.

### Application Example 3:

a) 1000 parts of a solution are prepared by dissolving in water 80 parts of the composition obtained according to Example 2. Knitted cotton fabrics are impregnated with the solution such that it increases by 70% of its weight, subsequently dried below 80°C and fixed for 5 minutes at 160°C.
b) 1000 parts of a solution are prepared by dissolving in water 80 parts of the composition obtained according to Example 2 and 10 parts of sodium acetate. Knitted cotton fabrics are impregnated with the solution such that it increases by 70% of its weight, subsequently dried below 80°C and fixed for 5 minutes at 160°C.
c) 1000 parts of a solution are prepared by dissolving in water 80 parts of the composition obtained according to Example 2 and 10 parts of sodium carbonate. Knitted cotton fabrics are impregnated with the solution such that it increases by 70% of its weight, subsequently dried below 80°C and fixed for 5 minutes at 160°C.

The finished fabrics obtained according to a), b) and c) are submitted to a washing test at 40°C (1 time, 10 times, 30 times and 50 times) under the following conditions:
- Detergent:: 30 g IEC 456-A (standard detergent)
- Washing machine:: Wascator FOM 71 MP LAB.

The covalently bound cyclodextrin complex has been verified by determination of the antimicrobial efficacy against Staphylococcus aureus ATCC 9144 and Escherichia coli NCTC 8196 in an agar diffusion test (AATCC test method 147). Antimicrobial efficacy was very high against Staphylococcus aureus ATCC 9144 and Escherichia coli NCTC 8196 in the case of the fabrics obtained according to a), b) and c) after 30 washes and still good antimicrobial efficacy was observed after 50 washes. The size of the zone of inhibition increased with increasing pH applied during the finishing process in the following order: a) < b) < c).

## Claims

1. An aqueous liquid composition comprising a reactive cyclodextrin derivative or the hydrolyzate thereof and at least one component selected from the group consisting of ε-caprolactam and isopropanol, propylene carbonate, polyethylene glycol, N-methyl-2-pyrrolidone, 1-methoxy propanol, diethylene glycol diethyl ether, glycerol and 1,2-propylene glycol as the water-miscible organic solvent.

2. A composition according to claim 1, wherein the water-miscible organic solvent is present in an amount of 2 to 60 % by weight, based on the total weight of the composition.

3. A composition according to claim 1 or 2, wherein ε-caprolactam is present in an amount of 2 to 40 % by weight, based on the total weight of the composition.

4. A composition according to any one of claims 1 to 3, wherein the reactive cyclodextrin derivative or the hydrolyzate thereof is present in an amount of 2 to 70 % by weight, based on the total weight of the composition.

5. A composition according to any one of claims 1 to 4, wherein the reactive group of the cyclodextrin derivative is a nitrogen-containing heterocycle having at least one substituent selected from the group consisting of halogen and unsubstituted or substituted pyridinium.

6. A composition according to claim 5, wherein the reactive group of the cyclodextrin derivative is
a) a triazine group of formula 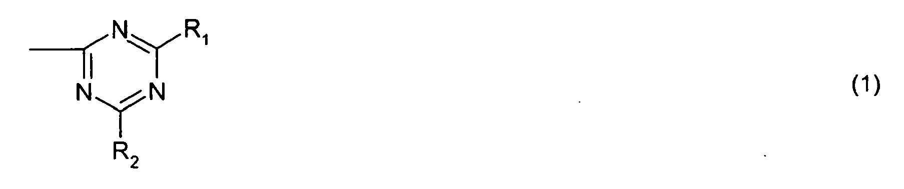 wherein
R₁ is fluorine, chlorine, unsubstituted or carboxy-substituted pyridinium or hydroxy, and
R₂ is as defined above for R₁ or is a radical of formula -OR₃ or -N(R₄)R₅, wherein
R₃ is hydrogen, alkali, C₁-C₈alkyl which is unsubstituted or substituted by hydroxy or C₁-C₄alkoxy, and
R₄ and R₅, independently from each other, are hydrogen; C₁-C₈alkyl which is unsubstituted or substituted by C₁-C₄alkoxy, hydroxy, sulfo, sulfato or carboxy; or phenyl which is unsubstituted or substituted by C₁-C₄alkyl, C₁-C₄alkoxy, halogen, nitro, carboxy or sulfo; or
b) a pyrimidinyl group of formula 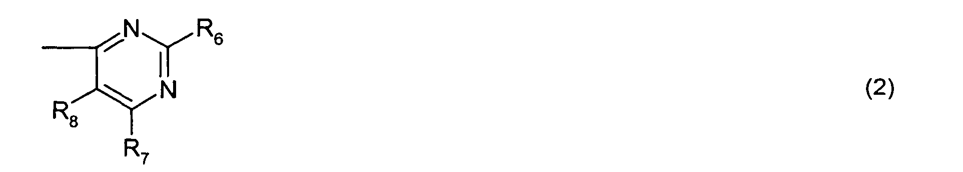 wherein
one of radicals R₆ and R₇ is fluorine or chlorine and the other one of radicals R₆ and R₇ is fluorine, chlorine, or is a radical of formula -OR₃ or -N(R₄)R₅ as defined above, and
R₈ is C₁-C₄alkylsuifonyl, C₁-C₄alkoxysulfonyl, C₁-C₄alkoxycarbonyl, C₂-C₄alkanoyl, chlorine, nitro, cyano, carboxyl or hydroxyl; or
c) a dichloroquinoxaline group of formula

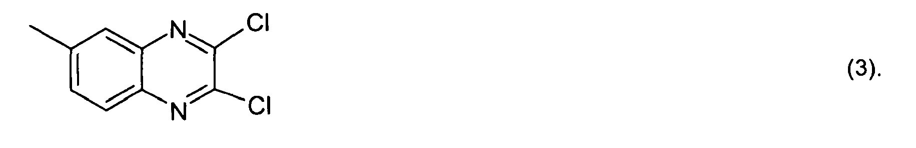

7. A composition according to claim 6, wherein the reactive group of the cyclodextrin derivative is
a triazine group of formula (1), wherein
R₁ is chlorine, and
R₂ is a radical of formula -OR₃, wherein R₃ is hydrogen, alkali or C₁-C₈alkyl, preferably alkali.

8. A composition according to any of claims 1 to 7, wherein the reactive cyclodextrin derivative contains 1 to 4 reactive groups.

9. A composition according to any of claims 1 to 8, wherein the composition further comprises a buffer selected from the group consisting of borax, borates, phosphates, polyphosphates, oxalates, acetates or citrates, in particular phosphates, acetates or citrates.

10. A finishing process comprising treating a substrate with the composition according to claim 1.

## Patentansprüche

1. Wässrige flüssige Zusammensetzung, welche ein reaktives Cyclodextrin-Derivat oder das Hydrolysat davon sowie mindestens eine Komponente, ausgewählt aus der Gruppe, bestehend aus ε-Caprolactam und Isopropanol, Propylencarbonat, Polyethylenglykol, N-Methyl-2-pyrrolidon, 1-Methoxypropanol, Diethylenglykoldiethylether, Glycerin und 1,2-Propylenglykol als wassermischbares organisches Lösungsmittel umfasst.

2. Zusammensetzung nach Anspruch 1, worin das wassermischbare organische Lösungsmittel in einer Menge von 2 bis 60 Gew.-% auf der Basis des Gesamtgewichts der Zusammensetzung vorliegt.

3. Zusammensetzung nach Anspruch 1 oder 2, worin ε-Caprolactam in einer Menge von 2 bis 40 Gew.-% auf der Basis des Gesamtgewichts der Zusammensetzung vorliegt.

4. Zusammensetzung nach einem der Ansprüche 1 bis 3, worin das reaktive Cyclodextrin-Derivat oder das Hydrolysat davon in einer Menge von 2 bis 70 Gew.-% auf der Basis des Gesamtgewichts der Zusammensetzung vorliegt.

5. Zusammensetzung nach einem der Ansprüche 1 bis 4, worin die reaktive Gruppe des Cyclodextrin-Derivats ein stickstoffhaltiger Heterozyklus mit mindestens einem Substituenten, ausgewählt aus der Gruppe, bestehend aus Halogen und unsubstituiertem oder substituiertem Pyridinium, darstellt.

6. Zusammensetzung nach Anspruch 5, worin die reaktive Gruppe des Cyclodextrin-Derivats
a) eine Triazin-Gruppe der Formel 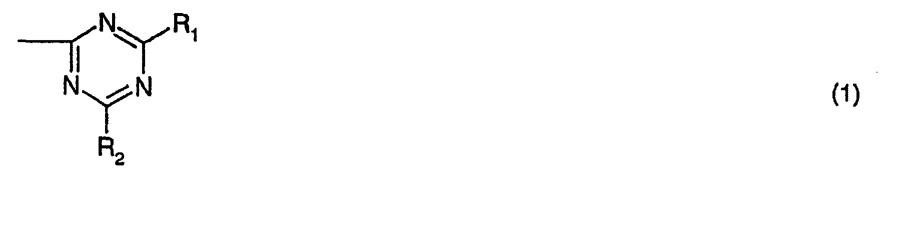 darstellt, worin
R₁ Fluor, Chlor, unsubstituiertes oder Carboxy-substituiertes Pyridinium oder Hydroxy darstellt, und
R₂ wie oben für R₁ definiert ist oder einen Rest der Formel -OR₃ oder -N(R₄)R₅ darstellt, worin
R₃ Wasserstoff, Alkali, C₁-C₈-Alkyl, welches unsubstituiert oder substituiert ist durch Hydroxy oder C₁-C₄-Alkoxy darstellt und
R₄ und R₅ unabhängig voneinander Wasserstoff; C₁-C₈-Alkyl, welches unsubstituiert oder durch C₁-C₄-Alkoxy. Hydroxy, Sulfo, Sulfato oder Carboxy substituiert ist; oder Phenyl, welches unsubstituiert oder durch C₁-C₄-Alkyl, C₁-C₄-Alkoxy, Halogen, Nitro, Carboxy oder Sulfo substituiert ist; sind oder
b) eine Pyrimidinyl-Gruppe der Formel 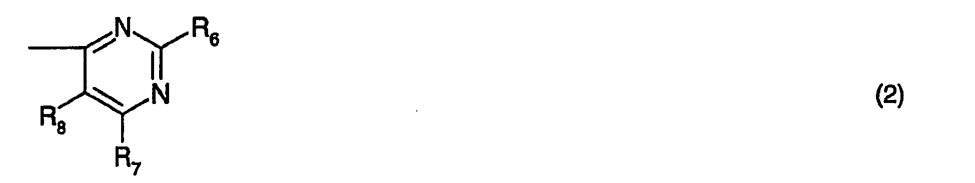 ist, worin
einer der Reste R₆ und R₇ Fluor oder Chlor darstellt und der andere der Reste R₆ und R₇ Fluor, Chlor oder ein Rest der Formel -OR₃ oder -N(R₄)R₅ wie oben definiert ist, und
R₈ C₁-C₄-Alkylsulfonyl, C₁-C₄-Alkoxysulfonyl, C₁-C₄-Alkoxycarbonyl, C₂-C₄-Alkanoyl, Chlor, Nitro, Cyano, Carboxyl oder Hydroxyl ist; oder
c) eine Dichlorchinoxalin-Gruppe der Formel 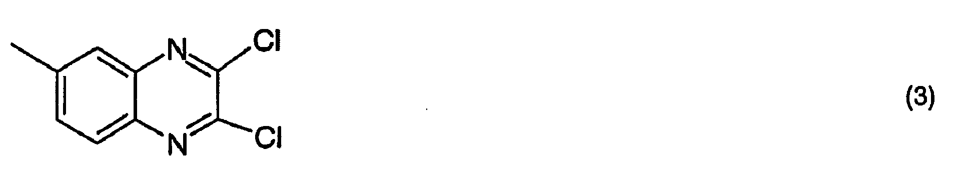 ist.

7. Zusammensetzung nach Anspruch 6, worin die reaktive Gruppe des Cyclodextrin-Derivats
eine Triazin-Gruppe der Formel (1), worin
R₁ Chlor darstellt und
R₂ ein Rest der Formel -OR₃ ist, worin R₃ Wasserstoff, Alkali oder C₁-C₈-Alkyl, vorzugsweise Alkali, darstellt, ist.

8. Zusammensetzung nach einem der Ansprüche 1 bis 7, worin das reaktive Cyclodextrin-Derivat 1 bis 4 reaktive Gruppen enthält.

9. Zusammensetzung nach einem der Ansprüche 1 bis 8, worin die Zusammensetzung weiterhin einen Puffer, ausgewählt aus der Gruppe, bestehend aus Borax, Boraten, Phosphaten, Polyphosphaten, Oxalaten, Acetaten oder Citraten, insbesondere Phosphaten, Acetaten oder Citraten, umfasst.

10. Veredelungsverfahren, welches die Behandlung eines Substrats mit der Zusammensetzung nach Anspruch 1 umfasst.

## Revendications

1. Composition liquide aqueuse comprenant un dérivé réactif de la cyclodextrine ou son hydrolysat et au moins un composant pris dans le groupe constitué par l'ε-caprolactame et l'isopropanol, le carbonate de propylène, le polyéthylèneglycol, la N-méthyl-2-pyrrolidone, le 1-méthoxy-propanol, l'éther diéthylique de diéthylène-glycol, le glycérol et le 1,2-propylèneglycol en tant que solvant organique miscible à l'eau.

2. Composition selon la revendication 1, dans laquelle le solvant organique miscible à l'eau est présent en une quantité de 2 à 60 % en masse, à base de la masse totale de la composition.

3. Composition selon la revendication 1 ou 2, dans laquelle l'ε-caprolactame est présent en une quantité de 2 à 40 % en masse, à base de la masse totale de la composition.

4. Composition selon l'une quelconque des revendications 1 à 3, dans laquelle le dérivé réactif de la cyclodextrine ou son hydrolysat est présent en une quantité de 2 à 70 % en masse, à base de la masse totale de la composition.

5. Composition selon l'une quelconque des revendications 1 à 4, dans laquelle le groupe réactif du dérivé de la cyclodextrine est un hétérocycle azoté ayant au moins un substituant pris dans le groupe constitué par un atome d'halogène et un groupe pyridinium substitué ou non substitué.

6. Composition selon la revendication 5, dans laquelle le groupe réactif du dérivé de la cyclodextrine est
a) un groupe triazine de formule 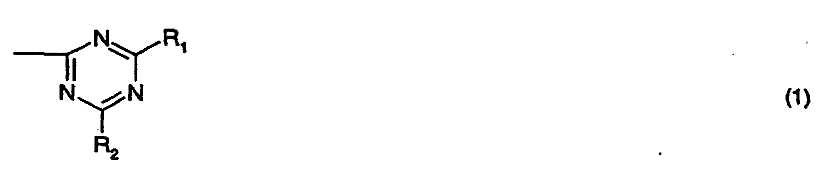 dans laquelle
R₁ représente un atome de fluor, de chlore, un groupe pyridinium non substitué ou substitué par un substituant carboxy ou hydroxy, et
R₂ est tel que défini ci-dessus pour R₁ ou est un radical de formule -OR₃ ou -N(R₄)R₅, où
R₃ représente un atome d'hydrogène, un alcali, un groupe alkyle en C₁-C₈ qui est non substitué ou substitué par un substituant hydroxy ou alkoxy en C₁-C₄, et
R₄ et R₅, indépendamment l'un de l'autre, représentent un atome d'hydrogène; un groupe alkyle en C₁-C₈ qui est non substitué ou substitué par un substituant alkoxy en C₁-C₄, hydroxy, sulfo, sulfato ou carboxy;
ou phényle qui est non substitué ou substitué par un substituant alkyle en C₁-C₄, alkoxy en C₁-C₄, halogène, nitro, carboxy ou sulfo; ou
b) un groupe pyrimidinyle de formule 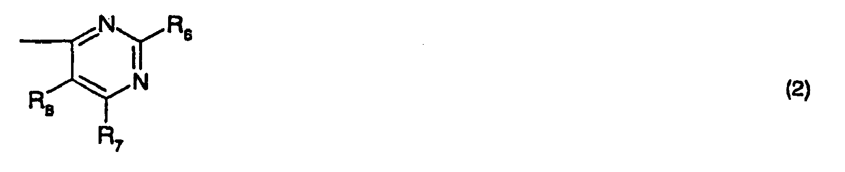 dans laquelle
un des radicaux R₆ et R₇ représente un atome de fluor
ou de chlore et l'autre des radicaux R₆ et R₇ représente un atome de fluor, de chlore, ou est un radical de formule -OR₃ ou -N(R₄)R₅ tel que défini ci-dessus, et
R₈ représente un groupe (alkyl en C₁-C₄)sulfonyle, (alkoxy en C₁-C₄)sulfonyle, (alkoxy en C₁-C₄) carbonyle, alcanoyle en C₂-C₄, chlore, nitro, cyano, carboxyle ou hydroxyle; ou
c) un groupe dichloroquinoxaline de formule

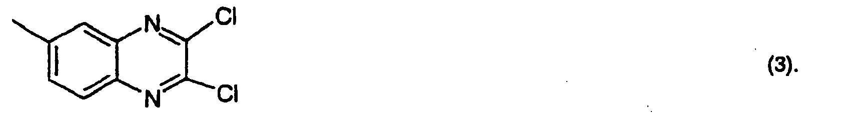

7. Composition selon la revendication 6, dans laquelle le groupe réactif du dérivé de la cyclodextrine est
un groupe triazine de formule (1), dans laquelle
R₁ représente un atome de chlore, et
R₂ représente un radical de formule -OR₃, dans laquelle R₃ représente un atome d'hydrogène, un alcali ou un groupe alkyle en C₁-C₈, de préférence un alcali.

8. Composition conformément à l'une quelconque des revendications 1 à 7, dans laquelle le dérivé réactif de la cyclodextrine renferme 1 à 4 groupes réactifs.

9. Composition selon l'une quelconque des revendications 1 à 8, où la composition comprend de plus un tampon pris dans le groupe constitué par le borax, les borates, les phosphates, les polyphosphates, les oxalates, les acétates ou les citrates, in particulier les phosphates, les acétates ou les citrates.

10. Procédé d'ennoblissement comprenant le traitement d'un substrat par la composition conformément à la revendication 1.
